# EUROPÄISCHE PATENTSCHRIFT

(11) **EP 0 699 690 B1**
(45) Veröffentlichungstag und Bekanntmachung des Hinweises auf die Patenterteilung: **30.06.1999**
(21) Anmeldenummer: 95113469.1
(22) Anmeldetag: 28.08.1995
(51) Int. Cl.: C08F 20/12, C08F 265/06

(54) **Polymethacrylat-Giessharze mit besonderer Mikrodomänen-Struktur**
Polymethacrylate casting resins with structure of particular micro-domains
Résines à couler de polyméthacrylates présentant une structure particulière à microdomaines

(30) Priorität: 02.09.1994 DE 4431253
(43) Veröffentlichungstag der Anmeldung: 06.03.1996
(73) Patentinhaber: Röhm GmbH, 64293 Darmstadt (DE)
(72) Erfinder: Meyer, Armin, D-64297 Darmstadt (DE)

(56) Entgegenhaltungen:
- DE-A- 4 332 013
- FR-A- 2 340 331

## Beschreibung

Die Erfindung betrifft Gießharzformulierungen, deren Polymerisation und daraus hergestellte Formteile, enthaltend Ester aus linearen, langkettigen Alkansäuren und mono- oder mehrfunktionellen Alkoholen als Trübungsmittel. Die solchermaßen hergestellten Polymethacrylat-Formkörper weisen eine Mikrodomänen-struktur auf, die beim Lichtdurchgang durch die Formkörper ein hohes Streuvermögen und einen niedrigen Transmissionsgrad bewirkt.

### Stand der Technik

Es ist bekannt, daß aus polymeren Werkstoffen Schaumstoffe durch die Zugabe von sogenannten Treibmitteln während der Herstellung oder bei der thermoplastischen Verarbeitung solcher polymeren Werkstoffe hergestellt werden können.

Solchermaßen hergestellte Schaumstoffe weisen im Vergleich zu den polymeren Werkstoffen, aus denen sie hergestellt wurden, ein völlig verändertes Verhalten bei der Lichttransmission und Lichtreflexion auf, welche maßgeblich durch die Porenstruktur der Schaumstoffe beeinflußt werden.

Bei der Herstellung von Schaumstoffen verwendete Treibmittel sind beispielsweise leicht flüchtige Substanzen, wie zum Beispiel Fluorchlorkohlenwasserstoffe, Alkane, Inertgase wie Stickstoff oder Kohlendioxid, oder Wasser, das entweder direkt eingespeist wird oder in Form von Hydratsalzen zugefügt wird, die das Wasser beim Erhitzen freisetzen.

EP-A 493 783 beschreibt beispielsweise Polycarbonat-Schaumstoffe, die aus einer Mischung eines thermoplastischen Polycarbonat-Kunststoffes, eines porenbildenden Zusatzes und eines Hydrats eines anorganischen Salzes durch Erhitzen über die Erweichungstemperatur des Kunststoffes hergestellt werden.

In EP-A 417 405 wird ein Direktbegasungsverfahren zum Aufschäumen von Polystyrol beansprucht, wobei in einem ersten Extruder oder einer ersten Extrusionszone Polystyrol aufgeschmolzen wird und die Schmelze unter hohem Druck mit einem Treibmittel vermischt wird. Bei der Entspannung der Schmelze an der Extrusionsdüse schäumt das Material auf und erstarrt zu einem Schaumstoff. Als Treibmittel werden vorzugsweise Alkanole oder Stickstoff eingesetzt.

DE-PS 10 17 784 umfaßt ein Verfahren zur Herstellung poröser, überwiegend aus Polymethylmethacrylat (PMMA) bestehenden Formkörpern, wobei einem aus Polymerisat und Monomeren bestehenden Gemisch zur Erzielung einer porigen Struktur während der Polymerisation festes Kohlendioxid zugefügt wird.

Weitere Schutzrechte betreffen geschäumte Polymethacrylat-Kunststoffe, bei denen das Treibgas durch Einwirkung einer wasserhaltigen Polymerkomponente auf eine Calciumcarbidhaltige Polymethacrylatkomponente erzeugt wird (SA-Patent 68 08 312) bzw. Polymethacrylat-Kunststoffe, die mittels peroxidischer Verbindungen, die beim Erhitzen gasförmige Bestandteile freisetzen, geschäumt werden (Japan.Kokai 78, 105 565, Chem. Abstr. 90, 39622a; Japan. Kokai 75, 151 278, Chem. Abstr. 84, 151530h).

Aus der EP-A 503 156 ist bekannt, zur Herstellung von Gießharzen mit Füllstoffbestandteilen, in eine gefüllte Suspension von Polymethylmethacrylat in Methylmethacrylat bis zu 50 Gew.-% Wasser zu emulgieren. Nach der Härtung wird der Wasseranteil aus dem Gießling durch Erhitzen ausgetrieben, wonach ein schaumartiges, hochgefülltes Material entsteht.

J.R. Elliot et al. beschreiben die Polymerisation von Methylmethacrylat in Gegenwart von Gemischen aus Lösungsmitteln, wie beispielsweise Toluol oder Methylisobutylketon, und aus Nichtlösungsmitteln, wie beispielsweise n-Butanol, Methanol und n-Heptan (Polym. Commun. 32(1), Seiten 10 bis 12, 1991). Dabei werden grobporige Schäume niedriger Dichte durch Vakuumtrocknung erzeugt, während feinporige Schäume durch Behandlung mit überkritischem Kohlendioxid gewonnen werden können. Die Porengröße in solchermaßen hergestellten PMMA-Schäumen ist auch vom Mischungsverhältnis Lösungsmittel/Nichtlösungsmittel abhängig.

In der noch nicht veröffentlichten deutschen Patentanmeldung P 43 32 013.9 werden Polymethacrylat-Gießharze mit einer Mikrodomänenstruktur beansprucht, die durch Polymerisation von Methacrylat-Sirupen in Gegenwart von 5 bis 15 Gew.-%, bezogen auf die Gießharzformulierung, an n-Alkanen mit 5 bis 12 Kohlenstoffatomen hergestellt werden.

Die Mikrodomänen-struktur mit Domänendurchmessern zwischen 10 nm und 2 µm ermöglicht bei Formteilen, die aus solchen Gießharzen hergestellt werden, hohe Reflexionsgrade bei niedrigen Transmissionsgraden ohne nennenswerte Streuverluste bei Bestrahlung mit weißem Licht.

### Aufgabe und Lösung

Bei lichstreuenden Polymermaterialien ist es von hoher Bedeutung, daß neben einem guten Streuvermögen der Polymermaterialien eine gleichmäßige Ausleuchtung von Formteilen aus solchen Polymermaterialien vorliegt.

Weiterhin ist wichtig, daß neben hohen Reflexionsgraden und damit kleinen Transmissionsgraden eine möglichst geringe Lichtabsorption im lichtstreuenden Polymermaterial vorliegt. Die dafür erforderliche Mikroporenstruktur kann bei Polymethacrylaten, die per se eine geringe Lichtabsorption aufweisen, mit den meisten der im Stand der Technik zitierten Verfahren nicht realisiert werden.

Das von J.R. Elliot et al. (Zitat siehe oben) beschriebene Verfahren zur Herstellung einer Mikrodomänenstruktur in Polymethylmethacrylat (PMM) ist komplex und technisch aufwendig. Darüber hinaus sind die von Elliot et al. realisierten Domänendurchmesser für eine effiziente und gleichmäßige Lichtstreuung in PMMA-Formteile, beruhend auf hohen Reflexionsgraden, immer noch zu groß.

Mit den in der deutschen Anmeldung P 43 32 013.9 beanspruchten Polymethacrylat-Gießharzen, die durch die Polymerisation der Monomerenanteile in Gegenwart von 5 bis 15 Gew.-% Alkanen mit 5 bis 12 Kohlenstoffatomen gebildet werden, lassen sich Mikrodomänenstrukturen erzeugen, die einen hohen Reflexionsgrad und einen niedrigen Transmissionsgrad bei daraus hergestellten Formteilen gewährleisten. Durch Änderungen der Temperatur der Formteile kann deren Lichtstreuvermögen gesteuert werden.

Diese Temperatursteuerung birgt neben vielen Vorteilen allerdings auch das Problem temperaturabhängiger Lichtstreuintensitäten in Anwendungen, bei denen solche Effekte nicht erwünscht sind, z.B. bei Beleuchtungskörpern, die der freien Witterung mit hohen Temperaturschwankungen ausgesetzt sind.

Deshalb bestand das Bedürfnis nach Polymethacrylat-Gießharzen, deren Lichtstreuintensität über weite Temperaturbereiche konstant ist.

Die daraus resultierende Aufgabe, Polymethacrylat-Gießharze mit einem hohen Reflexionsgrad und einem niedrigen Transmissionsgrad zur Verfügung zu stellen, wobei die Lichtstreuintensitäten weitgehend temperaturkonstant sind, wird durch das im folgenden beschriebene Verfahren in einfacher und hervorragender Weise gelöst, wobei die Verfahrensmerkmale folgende sind.

Eine Vorlösung VL aus 35 bis 97 Gew.-% bezogen auf die Gießharzformulierung Methacrylat-Monomere M, vorzugsweise Monomere der Formel I: 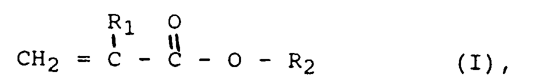 worin
- R₁: für Wasserstoff oder Methyl, sowie
- R₂: für einen gegebenenfalls verzweigten und gegebenenfalls substituierten Alkylrest mit 1 bis 8 Kohlenstoffatomn, für einen gegebenenfalls substituierten Cycloalkylrest mit 5 bis 12 Ringkohlenstoffatomen sowie für einen gegebenenfalls substituierten Arylrest mit 6 bis 10 Ringkohlenstoffatomen
stehen können, und 0 bis 40 Gew.%, vorzugsweise 0,1 bis 30 Gew.-% Polymethacrylat-Praepolymerisat PP wird gegebenenfalls mit 0,01 bis 1 Gew.-%, vorzugsweise mit 0,05 bis 0,5 Gew.-% eines monomeren Vernetzers VM, mit 0,05 bis 2 Gew.-%, vorzugsweise mit 0,1 bis 2 Gew.-% einer radikalisch polymerisierbaren Carbonsäure MC, wie beispielsweise Acryl- oder Methacrylsäure, mit 2 bis 15 Gew.-%, vorzugsweise mit 5 bis 10 Gew.-%, bezogen auf die Gießharzformulierung, Estern von linearen, langkettigen Alkansäuren mit 8 bis 30 Kohlenstoffatomen mit mono- oder mehrfunktionellen Alkoholen der Formel II, vorzugsweise mit linearen, langkettigen monofunktionellen Alkoholen mit mindestens 10 Kohlenstoffatomen als Trübungsmittel TrM: 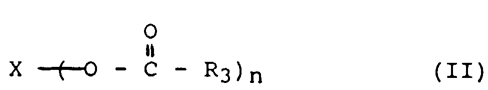 worin
- R₃: für Alkyl oder Aralkyl mit 10 bis 30 Kohlenstoffatomen,
- n: für eine ganze Zahl zwischen 1 und 6, sowie
- X: für, wenn n=1, Alkyl oder Aralkyl mit 8 bis 30 Kohlenstoffatomen, oder für, wenn n>1, Alkenyl oder Aralkenyl mit 1 bis 30 Kohlenstoffatomen, mit der Maßgabe, daß n nicht größer sein soll als die Zahl der Kohlenstoffatome in X,
stehen können, sowie mit 5 x 10⁻⁴ bis 1 Gew.-%, vorzugsweise mit 2 x 10⁻³ bis 10⁻¹ Gew.-% eines Trennmittels TM vermischt.

Weiterhin ist die Kombination des Trübungsmittels TrM der Formel II mit den schon aus P 43 32 013.9 bekannten Alkanen mit 5 bis 12 Kohlenstoffatomen als Trübungsmittel möglich, wobei das Trübungsmittel TrM der Formel II zu bis zu 25 Gew.-% bezogen auf TrM durch solche Alkane substituiert werden können, ohne daß die Temperaturkonstanz der Streuwirkung bei den gehärteten erfindungsgemäßen Gießharzen verloren geht.

Danach werden an sich übliche Polymerisationsinitiatoren PI zugesetzt, die Mischungen in eine Polymerisationskammer gefüllt und vorzugsweise im Wasserbad und/oder im Luftschrank polymerisiert. Die resultierenden Polymerisatscheiben weisen vorzugsweise Dicken zwischen 3 und 30 mm auf, wobei das Polymerisat abhängig von seiner Dicke durchscheinend bis gedeckt weiß erscheint und je nach Polymerisationsbedingungen Mikrodomänen in der Größenordnung von 10 nm bis etwa 5 um in enger Größenverteilung aufweist.

Die erfindungsgemäß hergestellten Polymerisatscheiben zeigen bei punkt- oder linienförmiger Hinterlegung eine ausgezeichnet gleichmäßige Ausleuchtung, ohne daß die Lichtquelle punktuell durchscheint. Dies ermöglicht den Bau von extrem flachen Beleuchtungskörpern.

### Durchführung der Erfindung

### Die Gießharz-Komponenten

Als Praepolymerisate PP kommen Polymethacrylate, vorzugsweise PMMA infrage, die gegebenenfalls untergeordnete Anteile bis etwa 20 Gew.-%, bezogen auf PP, an zweckmäßig ausgewählten Comonomeren, wie beispielsweise Methylacrylat oder Styrol, enthalten können. Die Praepolymerisate PP haben im allgemeinen ein mittleres Molekulargewicht M_{w} zwischen 10⁴ und 10⁷ Dalton, vorzugsweise zwischen 10⁵ und 5 x 10⁶ Dalton (M_{w} = Gewichtsmittel bestimmt per Gelpermeationschromatographie GPC: vgl. hierzu beispielsweise H.F. Mark et al. Encyclopedia of Polymer Science and Technology, Vol. 10, Seiten 1 bis 19, J. Wiley, New York, 1989).

Als polymerisierbare Bestandteile der Gießharz-Zusammensetzungen werden Derivate M der Acryl- und der Methacrylsäure eingesetzt, die die Praepolymerisate PP eingemischt enthalten und die vorzugsweise unter Bildung eines bei Raumtemperatur festen Polymerisats polymerisiert werden können. Die Gemische aus den Monomeren M und den Praepolymerisaten PP weisen im allgemeinen eine Viskosität von weniger als 5 Pa s, vorzugsweise von weniger als 0,5 Pa s bei der Temperatur auf, mit der die Gießharzformulierungen in die Polymerisationskammer gefüllt werden.

Bevorzugt werden Monomere M der Formel I eingesetzt: 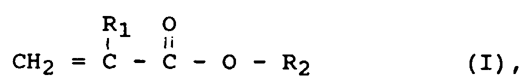 worin
- R₁: für Wasserstoff oder Methyl, sowie
- R₂: für einen gegebenenfalls verzweigten und gegebenenfalls substituierten Alkylrest mit 1 bis 8 Kohlenstoffatomen, für einen gegebenenfalls substituierten Cycloalkylrest mit 5 bis 12 Ringkohlenstoffatomen sowie für einen gegebenenfalls substituierten Arylrest mit 6 bis 10 Ringkohlenstoffatomen
stehen können.

An sich bekannte Substituenten für R₂ sind beispielsweise C₁- bis C₆-Alkylreste, Halogen-, Hydroxy-, Alkoxy- sowie Dialkylaminogruppen mit C₁- bis C₁₂-Alkylresten, vorzugsweise mit C₁- bis C₆-Alkylresten. Insbesondere seien als Monomere M Verbindungen der Formel I genannt, bei den R₁ für Methyl steht, wie beispielsweise Ethylmethacrylat, Propylmethacrylat, Isopropylmethacrylat, n-Butylmethacrylat, Isobutylmethacrylat, t-Butylmethacrylat, 2-Ethylhexylmethacrylat, Cyclohexylmethacrylat, Phenylmethacrylat, Benzylmethacrylat sowie besonders bevorzugt Methylmethacrylat.

Ferner enthalten die Gießharzformulierungen gegebenenfalls noch an sich bekannte vernetzende Monomere VM, deren Gehalt zwischen 0,1 und 1 Gew.-%, vorzugsweise zwischen 0,05 und 0,5 Gew.-%, bezogen auf den Sirup, liegt. Solche vernetzenden Monomeren VM sind beispielsweise Verbindungen mit mindestens zwei radikalisch polymerisierbaren Vinylgruppen im Molekül (vgl. hierzu z.B. H. Rauch-Puntigam, Th. Völker, "Acryl- und Methacrylverbindungen", Seite 184, Springer, Heidelberg, New York, 1967), wobei exemplarisch Ethylenglykoldi(meth)acrylat, 1,4-Butandioldi(meth)acrylat, Triglykoldi(meth)acrylat, Trimethylolpropantri(meth)acrylat, sowie Allylverbindungen, wie beispielsweise (Meth)allyl(meth)acrylat oder Triallylcyanurat, genannt seien.

Desweiteren enthalten die Gießharzformulierungen 0,05 bis 2 Gew.-%, vorzugsweise 0,1 bis 1,5 Gew.-% bezogen auf das Gießharz einer radikalisch polymerisierbaren Carbonsäure MC, wie beispielsweise Maleinsäure, Itaconsäure, Acrylsäure oder besonders bevorzugt Methacrylsäure.

Im allgemeinen weisen die Polymervorstufen einen Gehalt an (Meth)acrylsäureestern M gemäß Formel I, an radikalisch polymerisierbarer Carbonsäure MC und an vernetzenden Monomeren VM von über 35 Gew.-%, speziell von über 60 Gew.-% auf.

Weiterhin können als Comonomere mit den (Meth)acrylsäureestern M der Formel I copolymerisierbare Monomere in Anteilen von 0,5 bis etwa 20 Gew.-% bezogen auf M verwendet werden, wie beispielsweise Vinylaromaten, wie Styrol, α-Methylstyrol, ringsubstituierte Styrole oder Divinylbenzol, heterocyclische Verbindungen, wie Vinylpyrrolidon oder Vinylpyridin, Vinylester, wie Vinylacetat oder Vinylpropionat, sowie Vinylhalogenide, wie Vinylchlorid oder Vinylidenfluorid.

Vorzugsweise enthält die flüssige organische polymerisierbare Vorstufe Praepolymerisate PP in Anteilen zwischen 0,1 und 30 Gew.-%, besonders bevorzugt zwischen 1 und 15 Gew.-% bezogen auf die Gießharzformulierung. Die Praepolymerisate PP sind im allgemeinen aus denselben Monomeren M aufgebaut, wie sie in der Vorstufe (Sirup) enthalten sind, sie enthalten jedoch im allgemeinen keine funktionalisierten Monomereinheiten. Dabei gelten für die Praepolymerisate PP im allgemeinen die gleichen Zusammensetzungen wie für die Monomerbestandteile des Sirups. Vorzugsweise sind die Praepolymerisate PP in den Monomerbestandteilen gelöst, sie können aber auch darin dispergiert sein. Beispielsweise kann das Praepolymerisat PP ein Copolymerisat aus Methylmethacrylat und Methylacrylat im Gewichtsverhältnis 9 : 1 mit einem mittleren Molekulargewicht M_{w} von etwa 2 x 10⁶ Dalton sein.

Weiterhin enthalten die erfindungsgemäßen Gießharzformulierungen bekannte Polymerisationsinitiatoren PI in Mengen von 0,01 bis 5 Gew.-%, vorzugsweise von 0,1 bis 2 Gew.-% bezogen auf die Monomeren M. Als Polymerisationsinitiatoren PI werden im allgemeinen Radikalbildner eingesetzt, deren Zerfall photolytisch, thermisch oder durch Redox-Prozesse induziert werden kann.

Grundsätzlich sind alle diejenigen Radikalbildner geeignet, die bereits bei tiefen Temperaturen einen hohen Radikalstrom liefern (vgl. z.B. J. Brandrup, E.H. Immergut "Polymer Handbook", 3rd. Ed., Kap. III, Seiten 1 bis 65, J. Wiley, New York, 1989). Beispielsweise können als Polymerisationsinitiatoren PI verwendet werden: Peroxide, wie tert.-Butylperoctoat, Dibenzoylperoxid, Dicyclohexylperoxid, Cumolhydroperoxid oder bevorzugt Butylperisononanoat sowie tert.-Butylperpivalat, Halbester der Permaleinsäure, wie beispielsweise tert.-Butylpermaleinat, in Verbindung mit alkalisch reagierenden Metallsalzen (vgl. auch DE-AS 20 32 646), sowie Azoverbindungen, wie 4,4'-Azobis(2,4-dimethylvaleronitril) oder bevorzugt 2,2'-Azobis-(isobutyronitril). Zweckmäßigerweise erfolgt der Zusatz der Polymerisationsinitiatoren erst kurz vor der Polymerisation der Monomerbestandteile der Gießharze.

Desweiteren enthalten die Gießharzformulierungen innere Trennmittel TM in Mengen von 5 x 10⁻⁴ bis zu 1 Gew-% bezogen auf die Gießharzformulierung, bevorzugt in Mengen zwischen 10⁻³ und 10⁻¹ Gew.-%, besonders bevorzugt in Mengen zwischen 2 x 10⁻³ und 2 x 10⁻² Gew.-%, welche das Anhaften des gehärteten Gießharzes an der Wandung der Polymerisationskammer verhindern und damit zusätzlich für eine gute Oberflächenbeschaffenheit der gehärteten Gießharz-Formteile sorgen. Beispiele für innere Trennmittel TM sind Alkylphosphate, deren neutralisierte Derivate sowie bevorzugt Alkali- oder Erdalkalisalze von Fettsäuren.

Darüber hinaus können die Gießharzformulierungen 0,01 bis 15 Gew.-%, bevorzugt 0,1 bis 10 Gew.-% bezogen auf die Gießharzformulierungen an Füllstoffen, Pigmenten und/oder Farbstoffen enthalten. Als Füllstoffe geeignet sind die einschlägig für Gießharze verwendeten anorganischen Materialien, wie beispielsweise Aluminiumoxid, Alkali- und/oder Erdalkalioxide, Siliciumdioxid und/oder Titandioxid in verschiedenen Modifikationen, Tone, Silikate, Oxide, Kohle, Metalle oder Metallegierungen, synthetische Materialien wie Keramik, Glasmehl, Porzellan, Schlacke oder feinverteiltes Siliciumdioxid, Quarze, Kaolin, Talkum, Glimmer, Feldspat, Apatit, Baryte, Gips, Kreide, Kalkstein, Dolomit oder Gemische aus den vor- und nachstehend genannten Komponenten. Um farbige Formteile herstellen zu können, kann man dem Gießharz noch Pigmente und/oder Farbstoffe zusetzen. Als Beispiele seien Eisenoxid, Titandioxid, Zinkweiß, Ultramarinblau, Ruß oder organische Farbpigmente genannt. Pigmente können auch als vorgebildete Dispersionen mit Hilfe geeigneter Pigmentdispergiermittel in die Gießharze eingearbeitet werden.

Unerläßlicher Bestandteil der erfindungsgemäßen Gießharzformulierungen sind die Trübungsmittel TrM, die beim Härten (=Polymerisieren) der Gießharze die Mikrodomänen bilden. Als Trübungsmittel für die Gießharze werden 2 bis 15 Gew-%, bezogen auf die Gießharzformulierung, vorzugsweise 5 bis 10 Gew.-% an Estern der Formel II von linearen, langkettigen Alkansäuren mit mindestens 10 Kohlenstoffatomen mit mono- oder mehrfunktionellen Alkoholen, vorzugsweise mit linearen, langkettigen monofunktionellen Alkoholen, vorzugsweise mit linearen, langkettigen monofunktionellen Alkoholen mit mindestens 8 Kohlenstoffatomen, eingesetzt: 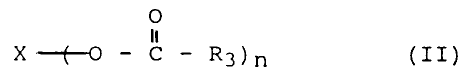 worin
- R₃: für Alkyl oder Aralkyl mit 10 bis 30 Kohlenstoffatomen,
- n: für eine ganze Zahl zwischen 1 und 6, sowie
- X: für, wenn n=1, Alkyl oder Aralkyl mit 8 bis 30 Kohlenstoffatomen, oder für , wenn n>1, Alkenyl oder Aralkenyl mit 1 bis 30 Kohlenstoffatomen, mit der Maßgabe, daß n nicht größer sein soll als die Zahl der Kohlenstoffatome in X,
stehen können.

Beispielhaft für Ester der Formel II mit n=1 seien genannt: Stearinsäuredecylester, Stearinsäuredodecylester, Stearinsäuretetradecylester, Stearinsäurehexadecylester, Stearinsäureoctadecylester, Stearinsäureeicosylester, Stearinsäure-11-phenylundecyl-ester, Palmitinsäuredecylester, Palminsäurehexadecylester, Laurinsäuredecylester, Laurinsäurehexadecylester, Myristinsäuredecylester oder Myristinsäurehexadecylester (zur Herstellung solcher langkettiger Alkansäureester vgl. beispielsweise Kirk-Othmer, Encyclopedia of Chemical Technology, 3rd. Ed., Vol. 4, Seiten 814 bis 871, J. Wiley, New York, 1978). Zur Herstellung der zur Veresterung verwendeten monofunktionellen langkettigen Alkanolen vgl. beispielsweise Kirk-Othmer loc.cit., Vol. 1, Seiten 716 bis 754, J. Wiley, New York, 1978).

Beispiele für Ester der Formel II mit n>1 sind Ethylenglycoldipalmitat, Ethylenglycoldimyristat, Ethylenglycoldilaurat, Glycerintripalmitat, Glycerintrilaurat, Pentaerythrittetrapalmitat, Pentaerythrittetralaurat, Arabinitolpentapalmitat oder Sorbitolhexapalmitat (zur Herstellung und Veresterung mehrfunktioneller Alkohole vgl. beispielsweise Kirk-Othmer, loc.cit., Vol. 1, Seiten 754 bis 789, J. Wiley, New York, 1978). In einer weiteren Ausführungsform der Erfindung werden bis zu 25 Gew.-% (bezogen auf TrM) des Trübungsmittels TrM der Formel II durch die aus P 43 32 013.9 bekannten n-Alkane mit 5 bis 12 Kohlenstoffatomen ersetzt. Dabei bleibt die Temperaturkonstanz der Streuwirkung bei den erfindungsgemäßen Gießharzen erhalten. Bevorzugt sind n-Hexan, N-Heptan, N-Octan, N-Nonan und/oder n-Decan. Durch den Zusatz der Alkane ist eine weitere Feinsteuerung der Größe der Mikrodomänen möglich, wodurch spezielle Relationen zwischen Lichtstreuung und Lichttransmission bei den erfindungsgemäßen Gießharzen möglich sind.

Beim Härten der erfindungsgemäßen Gießharzformulierungen bilden sich, durch das Trübungsmittel bedingt, Mikrodomänen im Gießharz-Polymerisat, deren Durchmesser zwischen 10 nm und 5 µm, vorzugsweise zwischen 50 nm und 2 µm liegt, wobei die Größenverteilung der Mikrodomänen eng ist.

### Das Härten (= Polymerisieren) der Gießharzformulierungen

Das Polymerisationsverfahren zur Herstellung der gehärteten Gießharze kann in Anlehnung an an sich bekannte technische Vorgehensweisen erfolgen.

Das erfindungsgemäße Verfahren umfaßt zunächst die Herstellung der Gießharzformulierung, bestehend aus den Methacrylat-Monomeren M, dem Polymethacrylat-Praepolymerisat PP, der radikalisch polymerisierbaren Carbonsäure MC, dem Trübungsmittel TrM, dem Trennmittel TM, dem Polymerisationsinitiator PI, sowie gegebenenfalls dem monomeren Vernetzer VM und den Füllstoffen bzw. Pigmenten und/oder Farbstoffen in an sich bekannter Weise (vgl. z.B. H. Rauch-Puntigam, Th. Völker, "Acryl- und Methacrylverbindungen", Springer, Heidelberg 1967).

Die Gießharzformulierung wird in einer Polymerisationskammer üblicher Bauart, bevorzugt zwischen Scheiben aus Silikatglas, die beispielsweise mit einer Profilschnur druckbeständig abgedichtet werden, im Wasserbad polymerisiert. Beispielsweise betragen die Polymerisationszeiten zwischen 24 und 60 Stunden bei Wasserbadtemperaturen zwischen 35 und 55 Grad C. Nach Abschluß der Polymerisation im Wasserbad werden die gehärteten Polymerisatplatten im allgemeinen zwischen 4 und 12 Stunden bei Temperaturen zwischen 80 und 120 Grad C im Luftschrank zur Endpolymerisation getempert.

Solchermaßen können Platten von 3 bis 30 mm Dicke in fast beliebigen Flächenformaten, beispielsweise von 100 bis 2000 mm Länge und 50 bis 2000 mm Breite, hergestellt werden. Einschränkender Parameter für das Flächenformat ist die baustatische Eigenschaft der gehärteten Gießharz-Platten.

Die Oberfläche der gehärteten Gießharz-Platte ist von hoher optischer Güte, was eine weitgehende Abwesenheit von Ablöse- oder Haftpunkten zwischen der Wand der Polymerisationskammer und der Oberfläche der Gießharz-Platte bedeutet.

### Vorteilhafte Eigenschaften der erfindungsgemäßen Gießharz-Polymerisate

Von herausragender Bedeutung ist das Lichtstreuverhalten der erfindungsgemäßen Gießharz-Formteile, die einen sehr hohen Reflexionsgrad und einen sehr geringen Transmissionsgrad bei niedriger Lichtabsorption für Weißlicht aufweisen. Infolge der spezifischen Mikrodomänenstruktur tritt ein nahezu ideales Streuverhalten auf.

Damit wird es beispielsweise möglich, eine von der Beleuchtungsindustrie schon lange geforderte Bedingung zu erfüllen: die Herstellung von Beleuchtungskörpern in Form sehr flacher, großflächiger Quader, die mit an einer Kante solcher Quader angeordneten Lichtquellen gleichmäßig ausgeleuchtet werden können. Färbt man das Gießharz mit löslichen Farbpigmenten ein, so lassen sich farbige Beleuchtungskörper mit denselben Eigenschaften herstellen.

Die spezifischen Trübungsmittel TrM gewährleisten eine konstante Lichtstreuung über einen großen Temperaturbereich, eine wichtige Bedingung für den Einsatz von Formteilen aus den erfindungsgemäßen Gießharzen im Außenbereich, beispielsweise im Werbe- oder Straßenbeleuchtungsbereich. Gleichzeitig weisen die Gießharze die für Polymethacrylat-Polymerisate spezifische hohe Witterungsbeständigkeit auf, wodurch langfristig Farbechtheit sowie konstant niedrige Lichtabsorption des erfindungsgemäßen Gießharzes gewährleistet sind.

In den mechanischen Eigenschaften entsprechen die erfindungsgemäßen Gießharze dem guten Niveau der konventionellen transparenten Polymethacrylat-Gießharze.

Folgende Beispiele sollen die Erfindung erläutern.

### BEISPIELE

### Beispiel 1

### Herstellung und Polymerisation der Gießharzformulierung GHF 1

36,3 Gew.-%, bezogen auf den Gießharz-Sirup, einer Mischung aus 12 Gew.-Teilen Polymethylmethacrylat (PP1) mit einem mittleren Molekulargewicht M_{w} = 4,76 x 10⁶ Dalton und 88 Gew.-Teilen Methylmethacrylat (M1) werden mit 54,4 Gew.-% Methylmethacrylat (M1) unter Rühren vermischt. Danach werden ebenfalls unter Rühren und Erwärmen auf 40 Grad C in folgender Reihenfolge eingemischt: 1,2 Gew.-% Methacrylsäure als radikalisch polymerisierbare Carbonsäure MC1, 8 Gew.-% Stearinsäureoctadecylester als Trübungsmittel (TrM1), 5 x 10⁻³ Gew.-% Stearinsäure als Trennmittel TM1 sowie zuletzt 0,1 Gew.-% 2,2'-Azobis-(isobutyronitril) als Polymerisationsinitiator.
Es resultiert ein gut verarbeitbarer Gießharz-Sirup GHF1

Der Gießharz-Sirup wird in eine Polymerisationskammer aus Silikatglas mit den Maßen 600 x 600 x 3,2 mm und mit einer umlaufenden Dichtschnur gefüllt und 24 Stunden im Wasserbad bei 45 Grad C polymerisiert. Während der Polymerisation bildet sich parallel zur Härtung des Gießharzes die erfindungsgemäße Mikrodomänenstruktur. Nach der Wasserbadpolymerisation werden die polymerisierten Gießharzplatten zur Endpolymerisation noch 6 Stunden bei 90 Grad C im Luftschrank getempert.

### Beispiele 2 und 3

### Herstellung der Gießharzformulierungen GHF2 und GHF3

Die Herstellung und die Polymerisation der Gießharzformulierungen GHF2 und GHF3 verläuft wie in Beispiel 1 beschrieben. Die Zusammensetzungen der Gießharze sind wie folgend:

| | GHF2 | GHF3 |
|---|---|---|
| Polymethylmethacrylat-Praepolymerisat (Gew-%) bezogen auf Sirup 3 | 10,0 % | 5,0 % |
| | | |
| Methylmethacrylat (Gew.-%) | 79,4 % | 86,9 % |
| | | |
| Methacrylsäure (Gew.-%) | 0,5 % | 2,0 % |
| | | |
| Stearinsäure (Gew.-%) | - | - |
| | | |
| Azobis-(isobutyronitril) (Gew.-%) | 0,1 % | 0,1 % |
| | | |
| Trübungsmittel Art / (Gew.-%) | 10,0 % (Cetylpalmitat) | 6,0 % (Ethylenglykolstearat) |

### Beispiel 4

Optische Eigenschaften der nach den Beispielen 1 bis 3 hergestellten Gießharz-Platten und ein Vergleich mit konventionellen Gießharzen gleicher Polymerzusammensetzung.

| Lichttransmission nach DIN 5036 | GHF1 | GHF2 | GHF3 | Plexiglas® GS | |
|---|---|---|---|---|---|
| | | | | Weiss 060 | Weiss 072 |
| | | | | (Vergleichsbeispiele) | |
| 500 nm (%) | 5 | 10 | 12 | 44 | 24 |

| Lichtreflexion in Abhängigkeit nach DIN 5036 | | | | | |
|---|---|---|---|---|---|
| 500 nm (%) | 94 | 88 | 86 | 24 | 70 |

## Patentansprüche

1. Gießharzformulierungen, die im gehärteten Zustand eine Mikrodomänenstruktur aufweisen, bestehend aus Gemischen aus Methacrylat- und/oder Acrylat-Monomeren M, gegebenenfalls aus Poly(meth)acrylat-Praepolymerisaten PP, gegebenenfalls aus monomeren Vernetzern VM, aus radikalisch polymerisierbaren Carbonsäuren MC, aus Trennmitteln TM, aus Polymerisationsinitiatoren PI, gegebenenfalls aus Farbstoffen, Pigmenten und/oder Füllstoffen, so wie aus Trübungsmitteln TrM,
dadurch gekennzeichnet,
daß das Trübungsmittel TrM ein Ester der Formel II ist 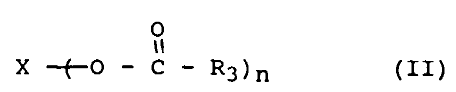 worin
R₃ für Alkyl oder Aralkyl mit 10 bis 30 Kohlenstoffatomen,
n für eine ganze Zahl zwischen 1 und 6, sowie
X für, wenn n=1, Alkyl oder Aralkyl mit 8 bis 30 Kohlenstoffatomen und für, wenn n>1, Alkylen und Aralkenyl mit 1 bis 30 Kohlenstoffatomen, mit der Maßgabe, daß n nicht größer sein soll als die Zahl der Kohlenstoffatome in X,
stehen können,
und daß das Trübungsmittel TrM in der Gießharzformulierung in Mengen zwischen 2 und 15 Gew.-% bezogen auf die Gießharzformulierung anwesend ist.

2. Gießharzformulierungen gemäß Anspruch 1, dadurch gekennzeichnet, daß bis zu 25 Gew.-% bezogen auf das Trübungsmittel des Trübungsmittels TrM der Formel II durch Alkane mit 5 bis 12 Kohlenstoffatomen ersetzt sind.

3. Gießharzformulierungen gemäß den Ansprüchen 1 und 2, dadurch gekennzeichnet, daß die Methacrylat- und/oder Acrylat-Monomeren M Verbindungen der Formel I sind: 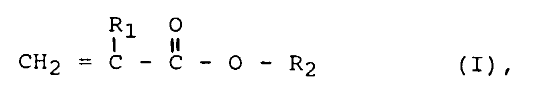 worin
R₁ für Wasserstoff oder Methyl
R₂ für einen gegebenenfalls verzweigten und gegebenenfalls substituierten Alkylrest mit 1 bis 8 Kohlenstoffatomen, für einen gegebenenfalls substituierten Cycloalkylrest mit 5 bis 12 Ringkohlenstoffatomen, sowie für einen gegebenenfalls substituierten Arylrest mit 6 bis 10 Ringkohlenstoffatomen
stehen können.

4. Gießharzformulierungen gemäß den Ansprüchen 1 bis 3, dadurch gekennzeichnet, daß die Anteile der Polymethacrylat-Praepolymerisate PP bezogen auf die Gießharzformulierungen zwischen 0,1 bis 30 Gew.-% betragen.

5. Gießharzformulierungen gemäß den Ansprüchen 1 bis 4, dadurch gekennzeichnet, daß die Anteile der radikalisch polymerisierbaren Carbonsäuren MC bezogen auf die Gießharzformulierungen zwischen 0,05 bis 2 Gew.-% betragen.

6. Gießharzformulierungen gemäß den Ansprüchen 1 bis 5, dadurch gekennzeichnet, daß die Anteile der Formtrennmittel TM bezogen auf die Gießharzformulierungen zwischen 5 x 10⁻⁴ und 1 Gew.-% betragen.

7. Gießharzformulierungen gemäß den Ansprüchen 1 bis 6, dadurch gekennzeichnet, daß die Anteile der Farbstoffe, Pigmente und/oder Füllstoffe bezogen auf die Gießharzformulierungen zwischen 0,1 und 10 Gew.-% betragen.

8. Gießharzformulierungen gemäß den Ansprüchen 1 bis 7, dadurch gekennzeichnet, daß die Anteile der monomeren Vernetzer VM bezogen auf die Gießharzformulierungen zwischen 0,01 und 1 Gew.-% betragen.

9. Gießharzformulierungen gemäß den Ansprüchen 1 bis 8, dadurch gekennzeichnet, daß die in den gehärteten Gießharzformulierungen vorhandene Mikrodomänenstruktur aus Mikrodomänen aufgebaut ist, deren Durchmesser zwischen 10 nm und 5 µm liegen.

10. Verwendung von gehärteten Gießharzformulierungen gemäß den Ansprüchen 1 bis 9 zum Bau von Beleuchtungskörpern.

## Claims

1. Casting resin formulations which in the hardened state have a microdomain structure consisting of mixtures of methacrylate and/or acrylate monomers M, optionally poly(meth)acrylate prepolymers PP, optionally monomeric cross-linking agents VM, radically polymerisable carboxylic acids MC, mould release agents TM, polymerisation initiators PI, optionally dyes, pigments and/or fillers, and opacifiers TrM,
characterised in that the opacifier TrM is an ester of formula II 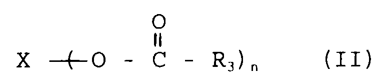 wherein
R₃ may denote alkyl or aralkyl having 10 to 30 carbon atoms,
n may denote an integer between 1 and 6, and
X may denote alkyl or aralkyl having 8 to 30 carbon atoms, if n=1, or alkylene and aralkenyl having 1 to 30 carbon atoms, if n>1, with the proviso that n should not be greater than the number of carbon atoms in X,
and the opacifier TrM is present in the casting resin formulation in amounts of between 2 and 15 wt.% based on the casting resin formulation.

2. Casting resin formulations according to claim 1, characterised in that up to 25 wt.%, based on the opacifier, of the opacifier TrM of formula II is replaced by alkanes having 5 to 12 carbon atoms.

3. Casting resin formulations according to claims 1 and 2, characterised in that the methacrylate and/or acrylate monomers M are compounds of formula I: 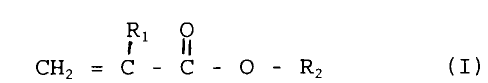 wherein
R₁ may denote hydrogen or methyl,
R₂ may denote an optionally branched and optionally substituted alkyl group having 1 to 8 carbon atoms, an optionally substituted cycloalkyl group having 5 to 12 cyclic carbon atoms, and an optionally substituted aryl group having 6 to 10 cyclic carbon atoms.

4. Casting resin formulations according to claims 1 to 3, characterised in that the amounts of the polymethacrylate prepolymers PP are from 0.1 to 30 wt.%, based on the casting resin formulations.

5. Casting resin formulations according to claims 1 to 4, characterised in that the amounts of the radically polymerisable carboxylic acids MC are from 0.05 to 2 wt.%, based on the casting resin formulations.

6. Casting resin formulations according to claims 1 to 5, characterised in that the amounts of the mould release agents TM are between 5 x 10-4 and 1 wt.%, based on the casting resin formulations.

7. Casting resin formulations according to claims 1 to 6, characterised in that the amounts of the dyes, pigments and/or fillers are between 0.1 and 10 wt.%, based on the casting resin formulations.

8. Casting resin formulations according to claims 1 to 7, characterised in that the amounts of the monomeric cross-linking agents VM are between 0.01 and 1 wt.%, based on the casting resin formulations.

9. Casting resins according to claims 1 to 8, characterised in that the microdomain structure present in the cured casting resin formulations is made up of microdomains which are between 10 nm and 5 µm in diameter.

10. Use of cured casting resin formulations according to claims 1 to 9 for the construction of lighting equipment.

## Revendications

1. Formulations de résine de coulée qui possèdent à l'état durci, une structure à microdomaines formées de mélanges à base de monomères de méthacrylate et/ou d'acrylate M, éventuellement de prépolymérisats de poly(méth)acrylate PP, éventuellement d'agents réticulants monomères VM d'acides carboxyliques polymérisables par voie radicalaire MC, d'agents de séparation TM, de promoteurs de polymérisation PI, éventuellement de colorants, de pigments et/ou de substances de charge, ainsi que d'agents opacifiants TrM,
caractérisées en ce que
l'agent opacifiant TrM est un ester de formule II : 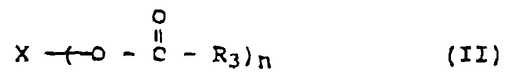 dans laquelle
R₃ peut représenter un alkyle ou un aralkyle ayant de 10 à 30 atomes de carbone,
n peut représenter un nombre entier compris entre 1 et 6 ainsi que
X peut représenter -quand n = 1- un alkyle ou un aralkyle ayant de 8 à 30 atomes de carbone et quand n > 1, un alkényle et un aralkényle ayant de 1 à 30 atomes de carbone,
avec la restriction que n ne doit pas être plus grand que le nombre des atomes de carbone dans X, et
l'agent opacifiant TrM dans la formulation de résine de coulée est présent en quantité comprises entre 2 et 15 % en poids, rapporté à la formulation de résine de coulée.

2. Formulations de résine de coulée conformément à la revendication 1,
caractérisées en ce qu'
on remplace jusqu'à 25 % en poids -rapporté à l'agent opacifiant- d'agent opacifiant TrM de formule II par des alkanes ayant de 5 à 12 atomes de carbone.

3. Formulations de résine de coulée conformément aux revendications 1 et 2,
caractérisées en ce que
les monomères de méthacrylate et/ou d'acrylate M sont des composés de formule I : 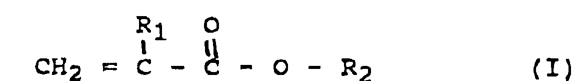 dans laquelle
R₁ peut représenter de l'hydrogène ou un méthyle,
R₂ peut représenter un radical alkyle éventuellement ramifié et éventuellement substitué ayant de 1 à 8 atomes de carbone ; un radical cycloalkyle éventuellement substitué ayant de 5 à 12 atomes de carbone dans le cycle, ainsi qu'un radical aryle éventuellement substitué ayant de 6 à 10 atomes de carbone dans le cycle.

4. Formulations de résine de coulée conformément aux revendications 1 à 3,
caractérisées en ce que
les proportions des prépolymérisats de polyméthacrylate PP rapportée aux formulations de résine de coulée, s'élèvent à entre 0,1 à 30 % en poids.

5. Formulations de résine de coulée conformément aux revendications 1 à 4,
caractérisées en ce que
les proportions des acides carboxyliques polymérisables par voie radicalaire MC -rapporté aux formulations de résine de coulée- s'élèvent à entre 0,05 à 2 % en poids.

6. Formulations de résine de coulée conformément aux revendications 1 à 5,
caractérisées en ce que
les proportions des agents de séparation des moules TM - rapporté aux formulations de résine de coulée- s'élèvent à entre 5 x 10⁻⁴ et 1 % en poids.

7. Formulations de résine de coulée conformément aux revendications 1 à 6,
caractérisées en ce que
les proportions des colorants, pigments et/ou substances de charge, rapporté aux formulations de résine de coulée, s'élèvent à entre 0,1 et 10 % en poids.

8. Formulations de résine de coulée conformément aux revendications 1 à 7,
caractérisées en ce que
les proportions d'agent réticulant monomère VM, rapporté aux formulations de résine de coulée, s'élèvent à entre 0,01 et 1 % en poids.

9. Formulations de résine de coulée conformément aux revendications 1 à 8,
caractérisées en ce que
la structure à microdomaines présente dans les formulations de résine de coulée durcies, est constituée de microdomaines dont les diamètres se situent entre 10 nm et 5 µm.

10. Utilisation des formulations de résine de coulée durcies conformément aux revendications 1 à 9 pour la construction de solides d'éclairage.
